# EUROPEAN PATENT SPECIFICATION

(11) **EP 2 612 023 B1**
(45) Date of publication and mention of the grant of the patent: **14.10.2015**
(21) Application number: 11751807.6
(22) Date of filing: 25.08.2011
(51) Int. Cl.: F03D 1/06

(54) **ROTOR BLADE FOR WIND TURBINE WITH MOVABLE CONTROL SURFACE**
ROTORSCHAUFEL FÜR EINE WINDTURBINE MIT BEWEGLICHER STEUERFLÄCHE
PALE DE ROTOR POUR ÉOLIENNE POSSÉDANT UNE SURFACE DE COMMANDE MOBILE

(30) Priority: 01.09.2010 US 379216 P; 01.09.2010 GB 201014560
(43) Date of publication of application: 10.07.2013
(73) Proprietor: Vestas Wind Systems A/S, 8200 Aarhus N (DK)
(72) Inventor: CHANG, Yun Chong Gabriel, Singapore 682297 (SG); LOH, Wuh Ken, Singapore 640821 (SG)
(74) Representative: Vestas Patents Department
(86) International application number: PCT/DK2011/050322
(87) International publication number: WO 2012/028148

(56) References cited:
- EP-A1- 1 995 455
- WO-A1-2007/071249
- WO-A1-2008/131800
- WO-A1-2009/061478
- WO-A2-2010/043645
- DE-A1-102008 016 007

## Description

This invention relates to improved wind turbine control surface actuators and more specifically to a fluidic muscle actuator for controlling the lift profile of a wind turbine blade.

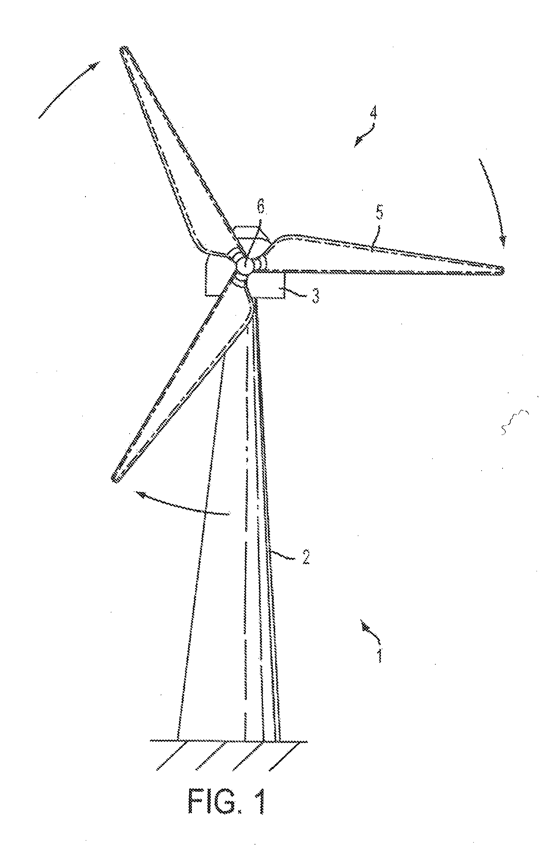

Figure 1 illustrates a wind energy power plant such as a wind turbine 1. The wind turbine 1 comprises a wind turbine tower 2 on which a wind turbine nacelle 3 is mounted. A wind turbine rotor 4 comprising at least one wind turbine blade 5 is mounted on a hub 6. The hub 6 is connected to the nacelle 3 through a low speed shaft (not shown) extending from the nacelle front. The wind turbine illustrated in Figure 1 may be a small model intended for domestic or light utility usage, or may be a large model, such as those that are suitable for use in large scale electricity generation on a wind farm for example. In the latter case, the diameter of the rotor could be as large as 150 metres or more.

Most modern wind turbines are controlled and regulated continuously during operation with the purpose of ensuring optimal performance in all operating conditions, such as at different wind speeds or subject to different demands from the power grid. The wind turbine can also be regulated to account for fast local variations in the wind velocity, such as so-called wind gusts. Also, as the loads on each of the blades vary due to the passing of the tower or the actual wind velocity varying with the distance to the ground (the wind profile), the ability to regulate each of the wind turbine blades individually is advantageous as it enables the wind loads to be balanced and reduces the yaw and tilt loads acting on the rotor.

Wind turbine blades can be provided with at least two different types of movement control, pitch control and lift profile control. Pitch control involves rotating an entire wind turbine blade 5 around its longitudinal axis at the junction with the hub.

Lift control is effected by changing the aerodynamic surface of part of or the entire length of the blade, thereby increasing or decreasing the blade lift or drag correspondingly. Different means of changing the aerofoil shape are known such as different types of movable or adjustable flaps, vortex generators for controlling the boundary layer separation, adaptive elastic members incorporated in the blade surface, means for changing the surface roughness, adjustable openings or apertures, or movable tabs. One advantage of lift control devices over pitch control is that they can be relatively small compared to the size of the blade and can give a faster response, in comparison with rotating the entire blade, due to there being less inertia involved.

WO2009/061478 describes a wind turbine rotor blade with a flap at the trailing edge. Various actuator arrangements are described to provide the force to move the flap which is in the form of a compliant trailing edge. WO2008/131800 describes a wind turbine blade with a trailing edge flap which can be moved with a pressure or vacuum source. When the flap moves, the pressure skin of the flap slides with respect to the pressure skin of the main body of the wind turbine blade. WO2010/043645 describes a flap arrangement for the trailing edge of a wind turbine blade where the flap is divided into a number of sections in the spanwise direction. The flap may be operated by a pneumatic system.

Most lift control systems require the installation of mechanical and electrical components in the wind turbine blade. Such systems are therefore particularly susceptible to operational damage from lightning that strikes the blade and to failure over prolonged periods of time due to wear and tear, and costly repairs are sometimes necessary.

We have therefore appreciated that it would be desirable to provide a more robust actuator for a control surface, in which the number of moving parts is minimised.

### SUMMARY OF THE INVENTION

The invention is defined in the independent claims to which reference should be made. Advantageous features are set forth in the appended claims.

According to a first aspect of the invention there is provided a wind turbine blade comprising a blade body, at least one blade control surface, and an actuator for moving the blade control surface relative to the blade body, wherein the actuator comprises a fluidic muscle adapted to contract in length when the pressure of the fluid within the fluidic muscle is increased, such that the at least one blade control surface is drawn from a first operating position into a second operating position. This provides a more robust actuator for a control surface, in which the number of moving parts is minimised. The term "fluidic muscle" is a trademark of Festo AG, Esslingen, Germany.

In one embodiment, the control surface is made of a pretensioned resilient material, such that the control surface is biased to move from the second operating position to the first operating position when the fluidic muscle is relaxed. This aids rapid movement of the blade from the second operating position to the first operating position.

In one embodiment, a spring is provided such that the control surface is biased to move from the second operating position to the first operating position when the fluidic muscle is relaxed.

In the context of the present invention, the term "chord" shall designate the distance from the leading edge to the trailing edge of the blade at any given position along the length of the blade, and the "chordwise direction" is direction between the leading edge and the trailing edge.

In one embodiment, the actuator contains at least one pair of fluidic muscles, and one fluidic muscle of the pair acts to move the blade control surface from a first position to a second position, and the second fluidic muscle of the pair acts to move the blade control surface from a second position to a first position. This provides an alternative or a supplementary method of moving blade control surfaces from a second position to a first position, and also provides a more active control mechanism.

In one embodiment, the fluidic muscle is housed in a compartment within the blade body. In this position, the fluidic muscle is provided proximate the blade control surface but is nevertheless in a position where it can be accessed for maintenance purposes.

In one embodiment, a first end of the fluidic muscle is attached to the blade body. This provides a stable attachment point for the fluidic muscle.

In one embodiment, the first end of the fluidic muscle is coupled to a structural spar in the main body.

In one embodiment, a second end of the fluidic muscle is coupled to the at least one blade control surfaces. The fluidic muscle can be attached directly to the blade control surface/s.

In one embodiment, the at least one blade control surface comprises a first side, forming a part of the external surface of the blade, and an extension portion of the first side for extending into the blade body and coupling to the second end of the fluidic muscle. The extension portion attaches the blade control surface to the fluidic muscle.

In one embodiment, the wind turbine blade comprises a shoulder for applying tension to the extension portion of the at least one blade control surface. The shoulder guides the movement of the blade control surface, any components attaching the fluidic muscle to the blade control surface, and/or the fluidic muscle. It also provides tension to the linkage between the blade control surface and the fluidic muscle, ensuring the linkage is responsive and aiding movement from the second position to the first position.

In one embodiment, the shoulder comprises a roller. The roller provides a lower friction means for applying tension to the blade control surface.

In one embodiment, the shoulder is a curved guide surface. The curved guide surface provides a means for applying tension whilst minimising the stress on the extension portion, maximising the fatigue life.

In one embodiment, the blade body comprises a rear spar located adjacent the at least one blade control surface in the chordwise direction, and the fluidic muscle couples to the at least one blade control surface through the slot. In operation, the slot in the rear spar guides the movement of the fluidic muscle and of any components attaching the fluidic muscle to the blade control surface.

In one embodiment, the at least one blade control surface comprises a first side, forming a part of the external surface of the blade, and wherein the first side is truncated to leave a gap between the first side and the blade body to accommodate movement of the at least one blade control surface from the first to the second position. This allows more freedom of movement for the at least one blade control surface and may therefore allow a greater range of control.

In one embodiment, the wind turbine blade comprises a cover, extending from the blade body towards the first side to substantially cover the gap. The cover is provided to minimise ingress of water, debris, and any other foreign bodies into the inner workings of the wind turbine blade and/or the at least one wind turbine blade control surface.

In one embodiment, the wind turbine blade comprises an actuator member extending between the fluidic muscle and the first side of the at least one blade control surface. This member connects the fluidic muscle and the at least one blade control surface. It may be appropriate to provide an actuator plate passing through the slot in the rear spar, as the fluidic muscle and/or blade control surface may be inappropriate guiding means.

The fluidic muscle is arranged in a substantially chordwise direction to the blade body. It is advantageous to provide the fluidic muscle arranged in substantially the same direction for efficiency and to minimise lateral stress. The fluidic muscle contracts in the chordwise direction in order to draw the control surface from the first operating position to the second operating position. The fluidic muscle is elongate in the chordwise direction and its elongate length changes during operation. The fluidic muscle acts to draw the control surface in a chordwise direction, such that the control surface pivots relative to the blade body.

In one embodiment, the wind turbine blade comprises a supply pipe for providing fluid to the fluidic muscle. This allows a source of fluid to be housed elsewhere.

In one embodiment, the supply pipe is pressurised. This allows fluid to be pressurised elsewhere and may allow faster blade control surface actuation.

In one embodiment, the wind turbine comprises a valve for controlling the flow of fluid to the fluidic muscle. This allows greater control of the fluidic muscle actuator, and may allow faster actuation.

In one embodiment, the valve is a solenoid valve. Solenoid valves are fast and reliable allowing quick actuation whilst also being low maintenance.

In one embodiment, the actuator comprises a local fluid storage tank. This allows fluid to be stored locally and released when needed. In the case where multiple fluidic muscle actuators are provided, it also allows for the same supply pipe to be used for more than one independently acting fluidic muscle actuator.

In one embodiment, the actuator comprises a pump coupled directly to the fluidic muscle. Fluid flow in and out of the muscle can then be directly controlled.

In one embodiment, the actuator is operable to provide at least a first flap operating position, a second flap operating position and a third flap operating position. In some embodiments, it may be preferable or necessary to provide three, or more, flap operating positions. This allows for more control flexibility.

In one embodiment, the at least one control surface is a trailing edge flap on the trailing edge of the blade. This allows variation of the wind profile of the wind turbine blade.

According to a second aspect of the invention, there is provided a wind turbine comprising a wind turbine blade as described above. This provides a more robust actuator for a control surface, in which the number of moving parts is minimised.

In one embodiment, the wind turbine comprises an actuator controller and a pump for supplying fluid under pressure to one or more fluidic muscles located in the wind turbine blades. This provides a more robust actuator for a control surface, in which the number of moving parts is minimised.

### BRIEF DESCRIPTION OF THE DRAWINGS

An embodiment of the invention will now be described by way of example only and with reference to the accompanying drawings in which:
Figure 1 illustrates a known wind turbine;
Figures 2A and 2B are schematic diagrams in cross-section through a wind turbine blade, illustrating the principle of operation according to an embodiment of the invention.
Figure 3 is an isometric cross-sectional view in the chordwise direction through a wind turbine blade, illustrating a pneumatic muscle actuator in a first embodiment of the invention;
Figure 4 illustrates an enlarged view of the pneumatic muscle actuator mounted in a wind turbine blade;
Figure 5 illustrates a side view of the pneumatic muscle actuator of Figure 4;
Figure 6 illustrates a further view of the pneumatic muscle actuator of Figure 4.
Figure 7 illustrates an alternative example of the invention.
Figures 8A and 8B are schematic diagrams in cross-section through a wind turbine blade, illustrating the principle of operation according to an embodiment of the invention.

### DETAILED DESCRIPTION OF THE PREFERRED EMBODIMENTS

Examples of the invention relate to an actuator for controlling one or more control surfaces on a wind turbine blade. The term control surface refers to a movable surface of the wind turbine blade for modifying the aerodynamic profile of the wind turbine blade, such as ailerons, leading or trailing edge flaps, leading edge slats, Krueger flaps, movable Gurney flaps, and stall inducing flaps.

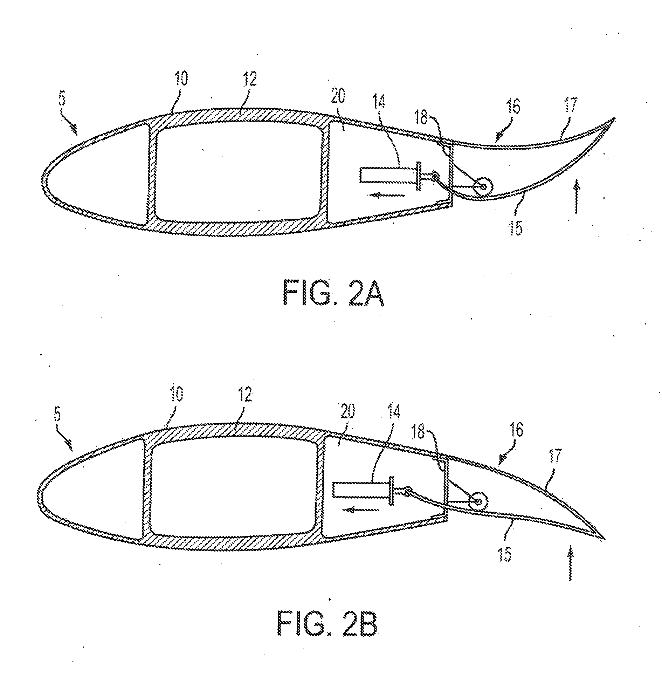

The operation of the actuator will now be described in more detail with reference to Figure 2, which shows part of a wind turbine blade 5. The blade 5 comprises an outer shell 10, a main spar 12, a pneumatic or fluidic muscle 14, a flap 16, having a first pressure side 15 and a second suction side 17, and a rear spar or terminating portion 18. The fluidic muscle 14 is provided within a compartment 20 in the blade body 5 between the main spar 12 and the flap 16. The compartment 20 is defined by the outer shell 10, the main spar 12 and rear spar 18. Rear spar 18 both closes the cavity at the rear of the blade and provides a connection surface on which the flap 16 can be mounted. Details of the preferred flap mounting methods are described later.

The main spar 12 and the rear spar 18 are structural members that extend along the span of the blade 5. They may be formed in a box shape, an I-beam shape or a C-beam shape.

In the spanwise direction, but not shown in the diagrams, further walls can be provided in the blade to compartmentalise the space between the main spar 12 and the rear spar 18. As is known in the art, these can also be used as attachment points for any components housed in the blade as well as for improving the strength of the blade in use.

A fluidic muscle 14 is a reinforced resilient bladder having a shape which contracts in length in a predetermined way under variations in its internal pressure. Fluid muscles are available commercially, and may be operated using pressurised air, other gases, or hydraulic fluid.

In this example, the fluidic muscle is arranged to contract in the chordwise direction as the pressure of the fluid in the muscle increases. By adjusting the pressure within the fluidic muscle, the fluidic muscle can therefore be arranged to apply a pulling force to the control surface moving the control surface between at least a first position (shown in Figure 2A) and a second operating position (shown in Figure 2B). A source of pressurised fluid is therefore provided for supplying fluid under pressure to the fluidic muscle and for receiving fluid drained from the muscle.

The flap itself can be returned from the second operating position to the first operating position using a further fluidic muscle for pulling the flap in the opposite direction. However, in order to simply the construction, the flap itself is constructed from a pretensioned resilient material that is biased to occupy the first position. The action of the fluidic muscle subsequently acts against the bias to pull the flap into the second operating position, such that when the fluidic muscle is released, the flap moves back to the first position. This can be seen in more detail in Figure 2B, in which the suction side 17 of the flap 16 is shown stretched and under tension. Thus, when the flow of fluid to the fluidic muscle is reduced or suspended, the stored energy in the suction side of the flap 17 returns the flap to the first position in Figure 2A.

In an example of the invention, the deflection of the flap in the first and second positions can be by as much as 10 degrees either side of a chord line drawn through the blade from the leading edge to the trailing edge.

Typically, the flap is manufactured in the first operating position shown in Figure 2A, at an angle of at least -10 degrees relative to the chord line. Pre-tensioning the flap in this way improves the stiffness of the mechanism.

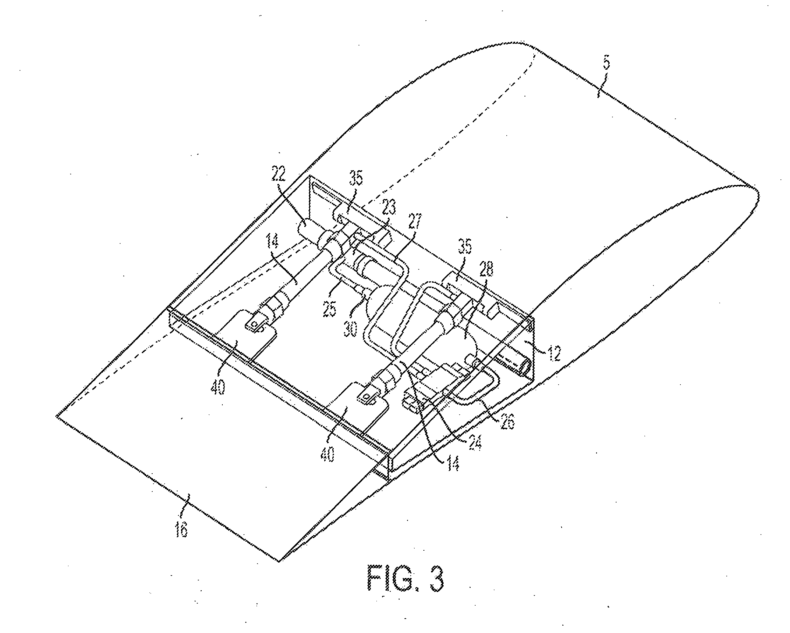

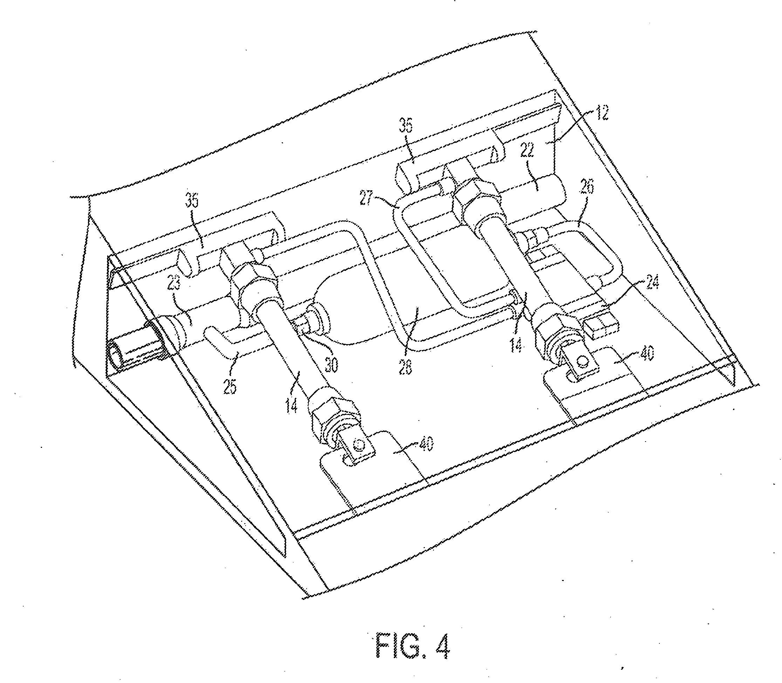

An example of the actuator will now be described with reference to Figures 3 and 4 which show more detail of the compartment 20 within the blade 5. In this example, two fluidic muscles 14 are provided in the blade between the main spar 12 and the flap 16, and are coupled to a fluid supply pipe 22, via a solenoid valve 24, feeder pipes 26 and 27, secondary tank 28 and non-return valve 30.

One end of each fluidic muscle 14 is mounted securely at a base portion 35, which may be secured to the main spar 12 or the wall of the compartment 20. The other end of each fluidic muscle 14 is attached to an actuator plate 40, which in turn is coupled to the flap 16. In use, changes in the fluid pressure supplied to fluidic muscles 14 causes the length of the muscle to change. An increase in pressure causes the diameter of the fluidic muscles to expand, but the length to contract, pulling the actuator plates 40 and the lower or pressure side of the flap 16 towards the main spar 12.

To achieve this, the supply pipe 22 transports pressurised fluid from a fluid reservoir optionally located in the blade, hub, nacelle, or tower, to the fluidic muscle 14 in the blade. The supply pipe 22 may be made of plastic or another appropriate material, and can conveniently be mounted in or on the spar 12 of the blade, or alternatively on the wall of compartment 20. The supply pipe 22 itself is preferably made of a flexible material to accommodate flexing movement of the blade and spar in use. A stiff collar 23, say of metal, is provided in the pipe 22 so that a connection with the feeder pipe 25 can be made. The stiff collar 23 can also be used to attach the supply pipe 22 to the interior structure of the blade.

The feeder pipe 25 joins the supply pipe 22 to an optional secondary fluid tank 28, which is used to provide a local store of pressurised fluid for the fluidic muscle. The tank 28 can be omitted where the pressure of the fluid in the supply pipe 22 is sufficiently high.

The solenoid valve 24 receives fluid from the optional secondary fluid tank 28, or directly from the supply line 22 via feeder pipe 26, and according to a control signal received from an actuator controller permits or prevents the flow of fluid to fluidic muscles 14. Further feeder pipes 27 connect the solenoid valve 24 to the fluidic muscles 14.

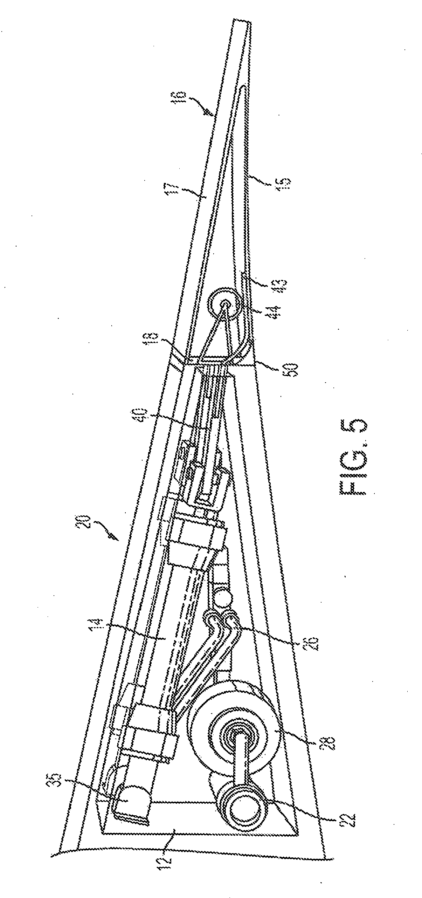

Not shown in the diagrams are one or more compressors or pumps to fill the fluidic muscles 14. The pump is provided between the source of pressurised fluid and the fluidic muscle, and could be located at the end of the supply pipe 22 in the wind turbine nacelle 3, hub 6, or blade root, or alternatively at an intermediate location in the supply pipe 22. It could also be located at the solenoid valve 24, in feeder pipes 25, 26 and 27, at the secondary tank 28 or the non-return valve 30. When the secondary tank 28 is provided, there are therefore at least two pumps, one pump to fill the secondary tank 28 from the supply pipe 22 and a second pump, preferably in the solenoid valve 24, to pressurise or depressurise the fluidic muscles. Figure 5 is a side view of the compartment 20 showing in more detail the arrangement for attaching the fluidic muscle 14 to the flap 16. A first end of the actuator plate 40 is secured to the end of the fluidic muscle 14 closest to the flap 16, by a bolt or other suitable fastener. The first pressure side 15 of the flap 16 has an extension portion 43 that extends into the interior of the blade at a break in the pressure surface of the blade.

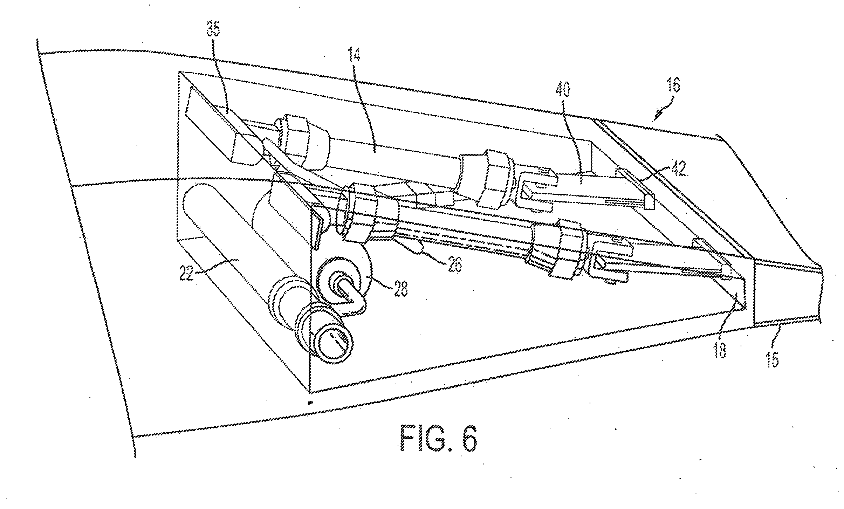

A section of the extension portion 43 is gripped by the actuator plate 40 at a second end, with the extension portion 43 and/or the actuator plate 40 passing through a slit or hole 42 (seen more clearly in Figure 6) in the rear spar 18. A roller guide 44 is attached to the rear spar 18 and acts on the flap extension portion 43 so that it remains slightly under tension in operation.

A cover 50 is also provided to cover or substantially cover any gap between the first side 15 and the rear spar 18 of the blade body. The cover is provided to minimise ingress of water, debris, and any other foreign bodies into the inner workings of the flap 16 and blade 5. The cover may be attached to the rear spar 18, and can be in the form of an L-shaped plate as shown in the diagram made from a suitable composite material. Other suitable shapes and means for attaching the cover 50 to the blade or the rear spar will be apparent to the skilled person.

Returning now to Figure 2, operation of the actuator shall now be explained in more detail. As noted above, the control surface is a preloaded bendable flap 16. First pressure side 15 and second suction side 17 are both at least partly flexible, such that when not actuated by the force of the fluidic muscle 14, the flap 16 is biased to remain in the first position illustrated in Figure 2A. The extension portion 43 of the flap 16 is attached to the fluidic muscle 14 via the actuator plate 40, such that actuation of the fluidic muscle 14 pulls on the extension portion 43, and pulls the flap 16 from the first operating position into the second operating position, changing the aerodynamic properties of the blade.

The movement of the extension portion 43 is controlled and stabilised by the cooperation of the actuator plate 40 with the slot 42, as well as the roller guide 44. The slot 42 constrains the actuator plate 40 to move in a solely translational chordwise manner under the action of the fluidic muscle 14. Thus, the force applied to the end of the extension portion 43 of the flap 16 is also solely translational. The roller 44 however acts on the extension portion 43 and displaces it slightly from the linear direction of movement defined by the fluidic muscle 14. This introduces tension in the extension portion 43 as it requires the extension portion 43 to roll around the roller 44.

As the extension portion 43 of the flap 16 is pulled towards the main spar 12 of the blade the first side 15 of the flap is also pulled towards the rear spar 18. To accommodate the movement of the flap 16, the first side 15 can, in one example, be made shorter than the second side 17, so that there is clearance for the flap to be pulled towards the rear spar 18 without buckling or deformation. In this case, the extension portion 43 can be omitted and the actuator plate 40 can extend through the rear spar 18 to attach directly to the interior of the first side 15 of the flap 16. The actuator plate 40 can be angled appropriately to extend from the fluidic muscle 14 to an attachment point at the inner surface of the first side 15. Alternatively, the actuator plate can have an elongate shape with an intermediate stepped portion that extends between the interior of the blade cavity, where the fluidic muscle is located, to the inside edge of the flap. The actuator plate 40 could be made of a suitably flexible material such as e-glass, otherwise known as fibreglass or glass-reinforced plastic. Other members for directly attaching the fluidic muscle to the first side 15 would occur to the skilled person.

Instead of actuator plate 40 gripping the extension portion 43, a wire or cable could be used to connect the first side 15 to the fluidic muscle 14.

In an alternative example, the rear spar 18 may be provided with a slot to receive the extension portion 43, or where the extension portion is omitted, the first side 15 allowing the flap 16 to slide under the rear spar 18 and partly into the cavity 20.

In operation, the flap is under tension when in the second position, and therefore stores potential energy applied by the fluidic muscle. Thus, when the fluidic muscle 14 is subsequently relaxed, the flap 16 returns to the first position. The fluidic muscle 14 could be relaxed by simply releasing a valve in a pump to let the pressurised fluid flow back into, for example, the secondary tank 28. A two-way pump or a second pump could also be provided to speed up the process.

In the example discussed above, the flap is biased by pretensioning the material of which it is made. However, in other examples the flap could be made of a more rigid material and biased towards a first operating position by other means, for example, by a spring or a stressed spar, as described below. Therefore, a rigid wind turbine flap pivoted about a spar set in a wind turbine blade could also be actuated by the fluidic muscle 14. Leading edge slats could be actuated in a similar way, as could various other wind turbine control surfaces as listed previously.

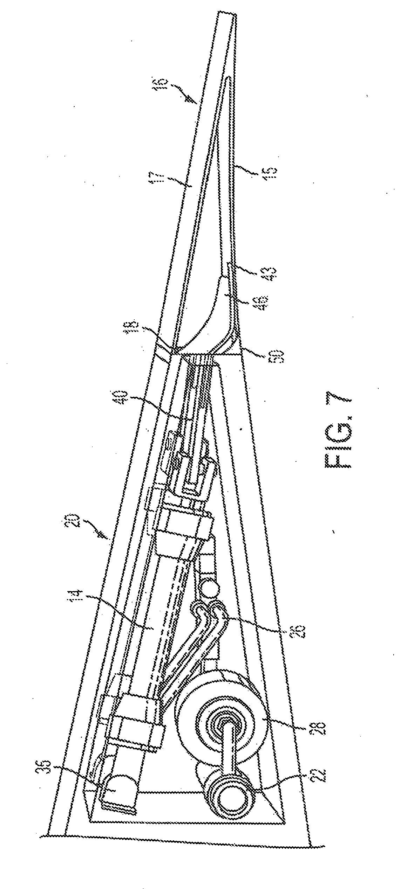

Use of the roller guide 44 is not essential, and there are other mechanisms that can guide the first side 15 when it moves between the actuated and non actuated positions. One such mechanism is slide guide 46 shown in Figure 7, which provides a curved surface or shoulder along which the extension portion 43 is at least partially constrained to move. The curved surface can therefore be convex and the extension portion slightly stretched over the surface so that it is under tension. This would provide a guide for first side 15 in which there are no moving parts, unlike the roller guide 44.

The roller guide 44 and the curved surface of slide guide 46 can be used in cases where the extension portion 43 is omitted and the first side 15 extends rearwards substantially to the rear spar 18. In this case, the roller or the surface can act on the first side 15 directly.

Of the two operating positions shown in Figure 2, the default or rest position is assumed to be shown in Figure 2A. This orientation is preferable as the fluidic muscle 14 can be relaxed faster than it can be pressurised, and because there is less danger of operating loads, such as from the flow of air over the blade surface, overwhelming the fluidic muscle and moving the flap 16 from the second position in Figure 2B to the position in Figure 2A merely by load on the blade 5. In alternative embodiments, the default position may be that shown in Figure 2B.

It is also possible to provide an unstressed blade with two muscle actuators, one for pulling the first side and one for pulling the second side. In use, the flap is then moved from the first operating position shown Figure 2A to the second operating position shown in Figure 2B by the fluidic muscle 14, and a second fluidic muscle would be used to move the flap back to the position shown in Figure 2A, rather like the action of muscles in a human arm, for example.

Two separate fluidic muscles could be provided, each muscle having a separate pump, or the two muscles could advantageously share a fluid source. This would have the added advantage of being a closed system in which the fluid in one muscle would simply be pumped to the other muscle, rather than being returned to the supply pipe or local storage tank.

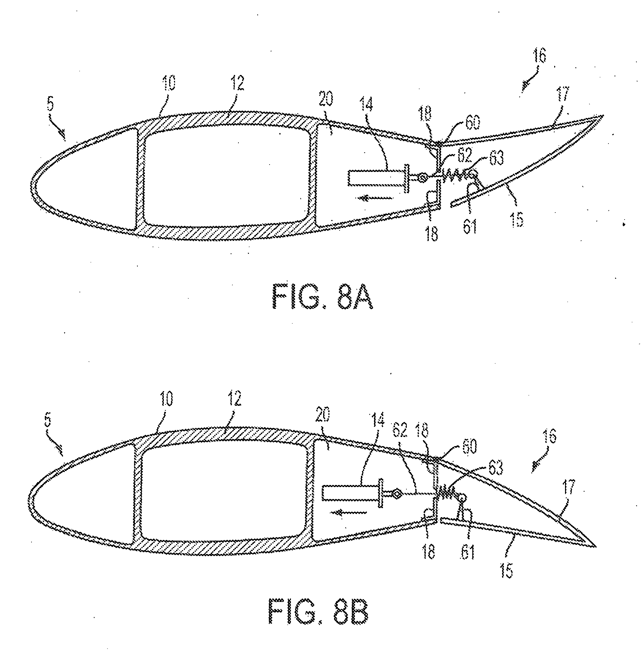

As mentioned above, the flap can be made of a more rigid material and biased towards a first operating position by means of a spring. Figures 8A and 8B show similar views to Figures 2A and 2B. In the example in Figure 8, the flap 16 is not a deformable flap, but rather it pivots about a hinge 60. A connecting portion 61 is provided on the first surface 15 which connects to a rod 62 which is connected to the fluidic muscle 14. Coaxial with the rod 62 is a compression spring 63 which is sandwiched between the rear spar 18 and the connecting portion 61. The spring 63 biases the flap 16 to the first position shown in Figure 8A and when the fluidic muscle 14 contracts to move the flap 16 to the second position shown in Figure 8B, the spring is compressed. The spring 63 can be pretensioned by means of a nut (not shown) in order to adjust the restoring force of moving the flap 16 from the second to the first position.

The elements for closing the gap between the first surface 15 and the blade body are not shown in Figures 8A and 8B for clarity.

A controller is also provided for controlling the solenoid valve 24 and any other actionable machinery within the fluid muscle actuator, such as any other valves or pumps that are provided. The controller could be a CPU, processor, computer, gate array, hardware logic, software, or a combination of hardware and software.

In one example, the controller is adapted to valve throttle the rate of pull or release of the fluidic muscle to provide intermediate operating positions for the flap. The rate of filling of the fluidic muscle could be similarly constrained. Therefore, while two positions have been described for the flap, it is possible for there to be three or more positions, attained by different levels of contraction of the pneumatic muscle actuator.

Although the fluidic muscles for operating the trailing edge flaps are arranged substantially in the chord-wise direction, fluidic muscles at different angles, such as 45 degrees from chordwise, would also work, particularly if provided in pairs. The fluid used to pressurise the fluidic muscle may also be a gas or a liquid. Suitable gases are air, Nitrogen, or a noble gas such as Helium.

Where attachment methods have not been described in detail, attachment could be achieved by bolting, gluing, slotting together, screwing, nailing, or any other appropriate means as will be appreciated by those skilled in the art.

In practice, the trailing edge of the flap 16 may be made stiffer or rigid in comparison to the rest of the outer skin 10 of the flap 16 which is flexible. The control surface itself could have a rigid outer skin in some embodiments.

Although a horizontal axis wind turbine is shown in figure 1, but the present invention is applicable to any wind turbine, including for example a vertical axis turbine having a rotor with one or more blades.

Various modifications to the embodiments described are possible and will occur to those skilled in the art without departing from the invention which is defined by the following claims.

## Claims

1. A wind turbine blade (5) comprising a blade body, at least one blade control surface (16), and an actuator (14) for moving the at least one blade control surface relative to the blade body; **characterised in that**
the actuator (14) comprises a fluidic muscle adapted to contract in length when the pressure of the fluid within the fluidic muscle is increased, such that the at least one blade control surface (16) is drawn from a first operating position into a second operating position; and
the fluidic muscle is arranged in a substantially chordwise direction to the blade body and the fluidic muscle is arranged to contract in the chordwise direction as the pressure of the fluid in the fluidic muscle increases.

2. The wind turbine blade of claim 1, wherein the control surface (16) is made of a pretensioned resilient material, such that the control surface is biased to move from the second operating position to the first operating position when the fluidic muscle is relaxed.

3. The wind turbine blade of claim 1, wherein a spring (63) is provided such that the control surface (16) is biased to move from the second operating position to the first operating position when the fluidic muscle is relaxed.

4. The wind turbine blade of claim 1, wherein the actuator (14) contains at least one pair of fluidic muscles, and wherein one fluidic muscle of the pair acts to move the blade control surface (16) from a first position to a second position, and the second fluidic muscle of the pair acts to move the blade control surface from a second position to a first position.

5. The wind turbine blade of any preceding claim, wherein the fluidic muscle (14) is housed in a compartment (20) in the blade body.

6. The wind turbine blade of any preceding claim, wherein a first end of the fluidic muscle (14) is attached to the blade body.

7. The wind turbine blade (5) of claim 5, wherein the first end of the fluidic muscle (14) is coupled to a structural spar (12) in the main body.

8. The wind turbine blade of any preceding claim, wherein a second end of the fluidic muscle (14) is coupled to the at least one blade control surface (16).

9. The wind turbine blade of claim 6, wherein the at least one blade control surface (16) comprises a first side, forming a part of the external surface of the blade, and an extension portion of the first side for extending into the blade body and coupling to the second end of the fluidic muscle.

10. The wind turbine blade of any preceding claim where the at least one blade control surface (16) comprises a first side, forming a part of the external surface of the blade, and wherein the first side is truncated to leave a gap between the first side and the blade body to accommodate movement of the at least one blade control surface from the first to the second position.

11. The wind turbine blade of claim 10, comprising a cover, extending from the blade body towards the first side to substantially cover the gap.

12. The wind turbine blade of any preceding claim, comprising a supply pipe (22) for providing fluid to the fluidic muscle (14).

13. The wind turbine blade of any preceding claim, wherein the at least one control surface (16) is a trailing edge flap on the trailing edge of the blade.

14. A wind turbine (1) comprising the wind turbine blade (5) of any preceding claim.

15. The wind turbine of claim 14, comprising:
an actuator controller; and
a pump for supplying fluid under pressure to one or more fluidic muscles (14) located in the wind turbine blades.

## Patentansprüche

1. Windturbinenflügel (5), der einen Flügelkörper, mindestens eine Flügelsteuerfläche (16) und einen Stellantrieb (14) zum Bewegen der mindestens einen Flügelsteuerfläche relativ zu dem Flügelkörper umfasst; **dadurch gekennzeichnet, dass**
der Stellantrieb (14) einen fluidischen Muskel ("Luftmuskel"), der dafür ausgelegt ist, sich in der Länge zusammenzuziehen, wenn der Druck des Fluids innerhalb des fluidischen Muskels derart erhöht wird, dass die mindestens eine Flügelsteuerfläche (16) aus einer ersten Betriebsposition in eine zweite Betriebsposition gezogen wird; und
der fluidische Muskel im Wesentlichen in einer Profilsehnenrichtung in Bezug auf den Flügelkörper angeordnet ist und der fluidische Muskel angeordnet ist, um sich in der Profilsehnenrichtung zusammenzuziehen, wenn sich der Druck des Fluids in dem fluidischen Muskel erhöht.

2. Windturbinenflügel nach Anspruch 1, wobei die Steuerfläche (16) aus einem vorgespannten, nachgiebigen Material derart hergestellt ist, dass die Steuerfläche vorgespannt ist, um sich von der zweiten Betriebsposition zu der ersten Betriebsposition zu bewegen, wenn der fluidische Muskel entspannt ist.

3. Windturbinenflügel nach Anspruch 1, wobei eine Feder (63) derart bereitgestellt ist, dass die Flügelsteuerfläche (16) vorgespannt ist, um sich von der zweiten Betriebsposition zu der ersten Betriebsposition zu bewegen, wenn der fluidische Muskel entspannt ist.

4. Windturbinenflügel nach Anspruch 1, wobei der Stellantrieb (14) mindestens ein Paar von fluidischen Muskeln enthält und wobei ein fluidischer Muskel des Paares wirkt, um die Flügelsteuerfläche (16) von einer ersten Position zu einer zweiten Position zu bewegen, und wobei der zweite fluidische Muskel des Paares wirkt, um die Flügelsteuerfläche von einer zweiten Position zu einer ersten Position zu bewegen.

5. Windturbinenflügel nach einem vorhergehenden Anspruch, wobei der fluidische Muskel (14) in einer Kammer (20) in dem Flügelkörper untergebracht ist.

6. Windturbinenflügel nach einem vorhergehenden Anspruch, wobei ein erstes Ende des fluidischen Muskels (14) an dem Flügelkörper befestigt ist.

7. Windturbinenflügel (5) nach Anspruch 5, wobei das erste Ende des fluidischen Muskels (14) mit einem strukturellen Holm (12) in dem Hauptkörper verbunden ist.

8. Windturbinenflügel nach einem vorhergehenden Anspruch, wobei ein zweites Ende des fluidischen Muskels (14) mit der mindestens einen Flügelsteuerfläche (16) verbunden ist.

9. Windturbinenflügel nach Anspruch 6, wobei die mindestens eine Flügelsteuerfläche (16) eine erste Seite umfasst, die einen Teil der äußeren Oberfläche des Flügels bildet, und einen erweiterten Abschnitt der ersten Seite umfasst, um sich in den Flügelkörper zu erstrecken und um sich mit dem zweiten Ende des fluidischen Muskels zu verbinden.

10. Windturbinenflügel nach einem vorhergehenden Anspruch, wobei die mindestens eine Flügelsteuerfläche (16) eine erste Seite, die einen Teil der äußeren Oberfläche des Flügels bildet, umfasst und wobei die erste Seite verkürzt ist, um eine Lücke zwischen der ersten Seite und dem Flügelkörper zurückzulassen, um eine Bewegung der mindestens einen Flügelsteuerfläche von der ersten zu der zweiten Position aufzunehmen.

11. Windturbinenflügel nach Anspruch 10, der eine Abdeckung umfasst, die sich von dem Flügelkörper zu der ersten Seite erstreckt, um im Wesentlichen die Lücke zu überdecken.

12. Windturbinenflügel nach einem vorhergehenden Anspruch, der ein Zuführungsrohr (22) umfasst, um dem fluidischen Muskel (14) ein Fluid bereitzustellen.

13. Windturbinenflügel nach einem vorhergehenden Anspruch, wobei die mindestens eine Steuerfläche (16) eine Hinterkantenklappe auf der Hinterkante des Flügels ist

14. Windturbine (1), die den Windturbinenflügel (5) nach einem vorhergehenden Anspruch umfasst.

15. Windturbine nach Anspruch 14, die umfasst:
eine Stellantriebssteuereinheit; und
eine Pumpe, um Fluid unter Druck dem einen oder den mehreren fluidischen Muskeln (14), die in den Windturbinenflügeln angeordnet sind, zuzuführen.

## Revendications

1. Pale d'éolienne (5) comprenant un corps de pale, au moins une surface de commande de pale (16), et un dispositif d'actionnement (14) pour déplacer l'au moins une surface de commande de pale par rapport au corps de pale ; **caractérisée en ce que**
le dispositif d'actionnement (14) comprend un muscle fluidique conçu pour se contracter en longueur lorsque la pression du fluide à l'intérieur du muscle fluidique est augmentée, de sorte que l'au moins une surface de commande de pale (16) est tirée d'une première position de mise en oeuvre dans une seconde position mise en oeuvre ; et
le muscle fluidique est agencé dans une direction sensiblement dans le sens de la corde par rapport au corps de pale et le muscle fluidique est agencé pour se contracter dans la direction dans le sens de la corde lorsque la pression du fluide dans le muscle fluidique augmente.

2. Pale d'éolienne selon la revendication 1, dans laquelle la surface de commande (16) est faite d'une matière élastique précontrainte, de sorte que la surface de commande est sollicitée pour se déplacer de la seconde position de mise en oeuvre à la première position de mise en oeuvre quand le muscle fluidique est détendu.

3. Pale d'éolienne selon la revendication 1, dans laquelle un ressort (63) est prévu de sorte que la surface de commande (16) est sollicitée pour se déplacer de la seconde position de mise en oeuvre à la première position de mise en oeuvre quand le muscle fluidique est détendu.

4. Pale d'éolienne selon la revendication 1, dans laquelle le dispositif d'actionnement (14) contient au moins un couple de muscles fluidiques, et dans laquelle un muscle fluidique du couple agit pour déplacer la surface de commande de pale (16) d'une première position à une seconde position, et le second muscle fluidique du couple agit pour déplacer la surface de commande de pale d'une seconde position à une première position.

5. Pale d'éolienne selon l'une quelconque des revendications précédentes, dans laquelle le muscle fluidique (14) est logé dans un compartiment (20) dans le corps de pale.

6. Pale d'éolienne selon l'une quelconque des revendications précédentes, dans laquelle une première extrémité du muscle fluidique (14) est attachée au corps de pale.

7. Pale d'éolienne (5) selon la revendication 5, dans laquelle la première extrémité du muscle fluidique (14) est reliée à un longeron structurel (12) dans le corps principal.

8. Pale d'éolienne selon l'une quelconque des revendications précédentes, dans laquelle une seconde extrémité du muscle fluidique (14) est reliée à l'au moins une surface de commande de pale (16).

9. Pale d'éolienne selon la revendication 6, dans laquelle l'au moins une surface de commande de pale (16) comprend un premier côté, formant une partie de la surface externe de la pale, et une partie d'extension du premier côté pour s'étendre dans le corps de pale et étant reliée à la seconde extrémité du muscle fluidique.

10. Pale d'éolienne selon l'une quelconque des revendications précédentes où l'au moins une surface de commande de pale (16) comprend un premier côté, formant une partie de la surface externe de la pale, et dans laquelle le premier côté est tronqué pour laisser un espacement entre le premier côté et le corps de pale pour loger le mouvement de l'au moins une surface de commande de pale de la première à la seconde position.

11. Pale d'éolienne selon la revendication 10, comprenant un couvercle, s'étendant depuis le corps de pale vers le premier côté pour sensiblement couvrir l'espacement.

12. Pale d'éolienne selon l'une quelconque des revendications précédentes, comprenant un tuyau d'alimentation (22) pour fournir du fluide au muscle fluidique (14).

13. Pale d'éolienne selon l'une quelconque des revendications précédentes, dans laquelle l'au moins une surface de commande (16) est un volet de bord de fuite sur le bord de fuite de la pale.

14. Éolienne (1) comprenant la pale d'éolienne (5) selon l'une quelconque des revendications précédentes.

15. Éolienne selon la revendication 14, comprenant :
une unité de commande de dispositif d'actionnement ; et
une pompe pour fournir du fluide sous pression à un ou plusieurs muscles fluidiques (14) situés dans les pales d'éolienne.
